Europäisches Patentamt

European Patent Office

Office européen des brevets

(19)

(11) Numéro de publication: **0 318 791 B1**

(12) **FASCICULE DE BREVET EUROPEEN**

(45) Date de publication de fascicule du brevet: **18.03.92**

(51) Int. Cl.⁵: **D04H 3/05**, B29C 67/14, B29D 30/38

(21) Numéro de dépôt: **88119347.8**

(22) Date de dépôt: **21.11.88**

(54) **Dispositif et procédé permettant d'appliquer des fils sur un support.**

(30) Priorité: **30.11.87 FR 8716690**

(43) Date de publication de la demande:
**07.06.89 Bulletin 89/23**

(45) Mention de la délivrance du brevet:
**18.03.92 Bulletin 92/12**

(84) Etats contractants désignés:
**AT BE CH DE ES FR GB GR IT LI LU NL SE**

(56) Documents cités:
**FR-A- 1 359 561**
**FR-A- 2 042 859**
**FR-A- 2 325 497**
**GB-A- 2 085 494**

(73) Titulaire: **COMPAGNIE GENERALE DES ETA-
BLISSEMENTS MICHELIN-MICHELIN & CIE
4, rue du Terrail
F-63000 Clermont-Ferrand(FR)**

(72) Inventeur: **Carrier, Gilles
Surat
F-63720 Ennezat(FR)**

(74) Mandataire: **Doussaint, Jean-Marie et al
MICHELIN & CIE Service K. Brevets
F-63040 Clermont-Ferrand Cedex(FR)**

## Description

L'invention concerne les dispositifs permettant d'appliquer des fils sur des supports, notamment des supports en matières plastiques ou en caoutchouc, ces dispositifs permettant par exemple la réalisation de nappes de renfort, notamment des nappes de renfort pour enveloppes de pneumatiques. L'invention concerne en particulier les dispositifs qui permettent d'appliquer ces fils en leur donnant une forme sinueuse.

Des dispositifs permettant d'appliquer des fils sur un support en leur donnant une forme sinueuse sont décrits par exemple dans les brevets ou demandes de brevets suivants : FR 2 042 859, FR 2 325 497, FR 2 501 126, SU 704 816,.

FR 2 042 859 décrit en particulier un appareil comportant un tambour rotatif avec un dispositif de guidage de corde monté de manière à se déplacer sur une barre afin de poser la corde sur la surface du tambour. On obtient ainsi une bande de renforcement sans fin, avec une corde continue disposée en zig-zag et placée en travers de la largeur du renforcement, d'un côté à l'autre, avec des inversions sur les bords du renforcement, les longueurs de corde comprises entre les inversions étant entrecroisées avec celles qui sont disposées en direction opposée.

Ces dispositifs présentent au moins un des inconvénients suivants :
- complexité des dispositifs, donnant lieu à des pannes fréquentes, ou nécessitant un entretien coûteux et fréquent ;
- manque de précision dans la pose des fils, de telle sorte que les nappes obtenues ont une géométrie hétérogène et présentent de ce fait des caractéristiques physiques qui varient suivant leur longueur.

Le but de l'invention est d'éviter ces inconvénients. En conséquence, le dispositif conforme à l'invention permettant d'appliquer au moins un fil sur la surface d'un support est caractérisé par les points suivants :
a) il comporte deux pinces disposées dans un ordre invariable suivant une direction, dite "direction de progression", la première pince étant dite "pince avant" et la deuxième pince étant dite "pince arrière" ;
b) le dispositif comporte des moyens permettant d'ouvrir et de fermer ces pinces, de telle sorte qu'elles soient dépourvues de contact avec le support et le fil lorsqu'elles sont ouvertes et qu'elles soient au contact du support et du fil lorsqu'elles sont fermées ;
c) l'agencement de la pince avant est tel que cette pince ne subisse pratiquement que des mouvements susceptibles de l'ouvrir ou de la fermer ;

d) le dispositif comporte des moyens permettant de déplacer la pince arrière dans la direction de progression, lorsqu'elle est fermée, de façon à faire progresser le support et le fil dans cette direction, la pince arrière s'éloignant alors de la pince avant qui est ouverte ;
e) le dispositif comporte des moyens permettant de déplacer la pince arrière dans la direction inverse à la direction de progression, lorsque cette pince est ouverte, la pince arrière se rapprochant alors de la pince avant qui est fermée ;
f) le dispositif comporte des moyens permettant de déplacer le fil dans des directions transversales par rapport à la direction de progression, la pince avant étant disposée entre ces moyens et la pince arrière, ces moyens étant agencés de telle sorte que, lors de ce déplacement transversal :
- la portion de fil déplacée s'étende depuis la pince arrière jusqu'en amont de la pince avant ;
- la portion de fil déplacée ne soit pas au contact du support ;
- la pince avant soit ouverte et la pince arrière fermée.

L'invention concerne également le procédé mis en oeuvre dans ce dispositif. Ce procédé qui permet d'appliquer au moins un fil sur la surface d'un support, est caractérisé par les points suivants :
a) on utilise deux pinces disposées dans un ordre invariable suivant une direction, dite "direction de progression",
la première pince étant dite "pince avant" et la deuxième pince étant dite "pince arrière" ;
b) lorsqu'on ouvre les pinces, elles ne sont au contact ni avec le support, ni avec le fil, et lorsqu'on ferme ces pinces elles sont au contact à la fois du support et du fil ;
c) on ne fait pratiquement subir à la pince avant que des mouvements susceptibles de l'ouvrir ou de la fermer ;
d) après avoir fermé la pince arrière, on la déplace dans la direction de progression de façon à faire progresser le support et le fil dans cette direction, en éloignant la pince arrière de la pince avant que l'on a préalablement ouverte ;
e) après avoir ouvert la pince arrière, on la déplace dans la direction inverse à la direction de progression, de façon à rapprocher la pince arrière de la pince avant que l'on a préalablement fermée ;
f) après avoir ouvert la pince avant et fermé la pince arrière, on déplace le fil, dans des directions transversales par rapport à la direction de progression, de telle sorte que la portion de fil déplacée s'étende depuis la pince arrière jusqu'en amont de la pince avant, sans que la portion de fil déplacée soit au contact du support.

L'invention concerne également les ensembles obtenus avec ce dispositif et ce procédé, ces ensembles étant notamment des nappes renforçantes.

L'invention concerne également une nappe renforçante comportant des fils de renfort, appliqués sur un support, qui ont une forme sinueuse avec des sommets, cette nappe étant caractérisée par les points suivants :

a) elle comporte plusieurs fils sur sa largeur ;

b) les fils ne sont pas entrecroise's ;

c) l'amplitude de l'ondulation de chaque fil est inférieure à la largeur de la nappe ;

d) pour chaque fil, la variation du taux de déplacement T est au plus égale à 5 % par excès ou par défaut par rapport à une valeur nominale quelconque Tn, le taux de déplacement T étant défini par la relation :

$$T = L/D$$

L étant la distance rectiligne entre deux sommets successifs et 2D étant la distance rectiligne entre deux sommets reliés par le fil par l'intermédiaire d'un autre sommet.

Les nappes renforçantes conformes à l'invention sont utilisées pour réaliser des articles divers, par exemple des tuyaux, des membranes, des courroies, des enveloppes de pneumatiques.

Le terme "fil" doit être pris dans un sens très général. Un fil peut être un "fil simple" constitué par exemple par un ou plusieurs filaments. Lorsque le fil simple est constitué par un seul filament il est appelé "monofilament" et lorsque le fil simple est constitué par plusieurs filaments il est appelé "multifilament".

Un fil peut être d'autre part lui-même un ensemble de fils simples. A titre d'exemple, un tel ensemble est appelé "retors" lorsqu'il est constitué par plusieurs fils simples réunis par une seule opération de torsion, et un tel ensemble est appelé "câblé" lorsqu'il est constitué par plusieurs fils, dont au moins un est un retors, réunis par une ou plusieurs opérations de torsion.

L'invention sera aisément comprise à l'aide des exemples non limitatifs qui suivent et des figures toutes schématiques relatives à ces exemples. Sur le dessin :

- la figure 1 représente en coupe verticale un dispositif conforme à l'invention ;
- la figure 2 représente, vu de dessus, le dispositif représenté à la figure 1 ;
- les figures 3 et 4 représentent les phases de la cinématique des pinces du dispositif représenté aux figures 1 et 2, chacune de ces figures comportant deux parties A et B ;

- la figure 5 représente, vue de dessus, une portion d'un fil d'une nappe obtenue avec le dispositif représenté aux figures 1 et 2 ;
- la figure 6 représente, vue de dessus, une portion de nappe conforme à l'invention ;
- la figure 7 représente, en coupe radiale, une enveloppe de pneumatique réalisée avec trois nappes renforçantes conformes à l'invention ;
- la figure 8 représente, vue de dessus, une autre nappe conforme à l'invention utilisée pour réaliser l'enveloppe de pneumatique représentée à la figure 7 ;
- la figure 9 représente, vue de dessus, une partie du dispositif représenté aux figures 1 et 2 lors de la réalisation de la nappe représentée à la figure 8.

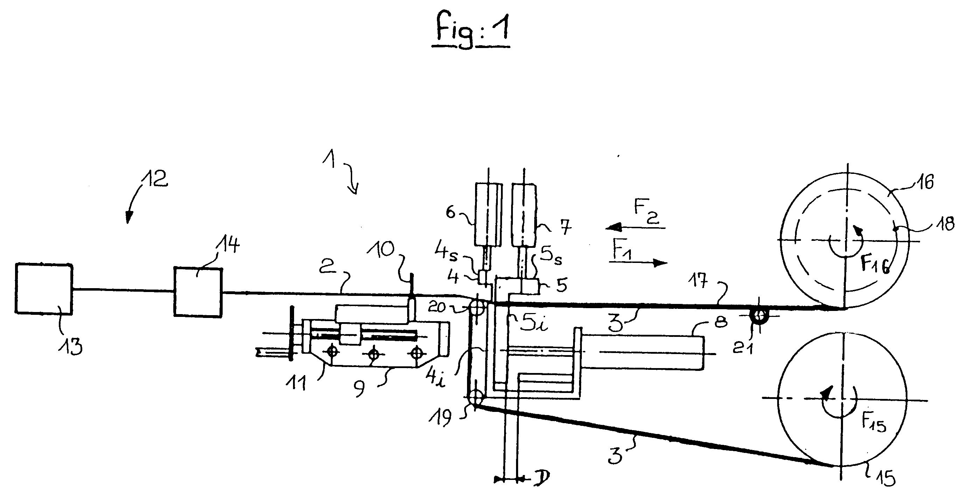

On voit aux figures 1 et 2 un dispositif conforme à l'invention, ce dispositif 1 permettant d'appliquer des fils 2 sur la surface d'un support 3. La figure 1 est une coupe verticale du dispositif 1 et la figure 2 est une vue de dessus de ce dispositif 1, la coupe de la figure 1 étant schématisée par les segments de lignes droites I-I à la figure 2. Le dispositif 1 comporte deux pinces 4, 5 disposées dans cet ordre suivant la direction, dite "direction de progression" schématisée par la flèche $F_1$ sur les figures 1 et 2. La pince 4 est dite "pince avant" et la pince 5 est dite "pince arrière".

Le dispositif 1 comporte des moyens 6, 7 permettant d'ouvrir et de fermer ces pinces 4, 5. Les moyens 6, 7 sont constitués par des vérins, le vérin 6 permettant d'ouvrir ou de fermer la pince avant 4 et le vérin 7 permettant d'ouvrir ou de fermer la pince arrière 5. Les pinces 4, 5 sont dépourvues de contact avec les fils 2 et le support 3 lorsqu'elles sont ouvertes et elles sont au contact des fils 2 et du support 3 lorsqu'elles sont fermées.

La pince avant 4 ne subit que des mouvements susceptibles de l'ouvrir ou de la fermer, ces mouvements étant verticaux, pratiquement perpendiculaires à la surface du support 3, cette surface étant pratiquement horizontale, au voisinage des pinces 4 et 5.

Le dispositif 1 comporte des moyens 8 permettant de déplacer la pince arrière 5 dans la direction de progression $F_1$ lorsque cette pince 5 est fermée, de façon à faire progresser le support 3 et les fils 2 dans cette direction $F_1$, la pince arrière 5 s'éloignant ainsi de la pince avant 4 qui est alors ouverte.

Ce dispositif 8 est constitué par exemple par un vérin. Ce même vérin 8 permet de déplacer la pince arrière 5 dans la direction inverse à la direction de progression $F_1$, c'est-à-dire en direction de la pince avant 4, lorsque la pince avant 4 est fermée et la pince arrière 5 est ouverte, cette direction étant schématisée par la flèche horizonta-

le $F_2$.

Le dispositif 1 comporte des moyens 9 permettant de déplacer les fils 2 dans des directions transversales par rapport à la direction de progression $F_1$. Ces directions transversales sont schématisées par les flèches horizontales opposées $F_3$, $F_4$ (figure 2), ces flèches étant perpendiculaires aux flèches $F_1$, $F_2$. Ces moyens de déplacement transversal 9 comportent un guide 10 pour les fils 2, par exemple un peigne au contact des fils 2 et relié à un vérin 11, ce peigne 10 étant représenté perpendiculaire à la direction de progression $F_1$.

Le dispositif 1 comporte un système d'alimentation 12 pour les fils 2 (figure 1), ce système 12 étant situé en amont du peigne 10, et des pinces 4, 5 par rapport au sens de la direction de progression $F_1$. Ce système 12 comporte par exemple un cantre de déroulage 13, avec autant de bobines qu'il y a de fils 2, et un appareil 14 permettant de compenser les variations de longueur des fils 2 dues au déplacement transversal causé par les moyens 9. Le cantre 13 et l'appareil 14 peuvent être réalisés conformément à des principes bien connus dans l'industrie et nous ne jugeons pas utile de détailler ces appareils 13, 14, dans un but de simplification.

Le dispositif 1 comporte une bobine 15 sur laquelle est enroulé le support 3, et une bobine 16 permettant d'enrouler la nappe 17 constituée par le support 3 et les fils 2 appliqués sur la surface du support 3. La bobine 16 est entraînée en rotation dans le sens de la flèche $F_{16}$ par le moteur 18 et les galets 19, 20, 21 permettent le déroulement du support 3 lorsque la bobine 15 tourne dans le sens de la flèche $F_{15}$, le support 3 étant tendu entre le galet 20 et le galet 21 lors de son passage dans les pinces 4, 5. A titre d'exemple la pince 4 comporte une machoire supérieure 4s et une machoire inférieure 4i, et la pince 5 comporte une machoire supérieure 5s et une machoire inférieure 5i, l'agencement de ces pinces étant tel que le vérin 6 n'actionne que la machoire supérieure 4s et que le vérin 7 n'actionne que la machoire supérieure 5s, les machoires inférieures 4i, 5i étant dépourvues de mouvements verticaux. De préférence les machoires 4s, 4i, 5s, 5i sont orientées dans une direction perpendiculaire à la flèche $F_1$. Les galets 20, 21 sont agencés de telle façon que le support 3 est tendu entre ces galets lorsque les pinces 4, 5 sont ouvertes, sans avoir de contact avec les machoires 4s, 4i, 5s, 5i en étant légèrement au dessus des machoires inférieures 4i, 5i, par exemple environ 2 mm. Le support 3 vient au contact des machoires inférieures 4i, 5i lorsque les machoires supérieures 4s, 5s, s'appliquent sur lui, sous l'action des vérins 6,7. La cinématique des pinces 4, 5 est représentée aux figures 3 et 4 sous forme de neuf phases successives référencées I à IX, la figure 3 représentant les phases I à V et la figure 4 représentant les phases VI à IX.

Les figures 3, 4 comportent deux parties, la partie A représentant ces phases en coupe verticale, et la partie B représentant ces phases vues de dessus. Sur ces figures 3, 4, les divers mouvements sont représentés par des vecteurs référencés avec la lettre M suivie d'un chiffre, et les positions initiales des pinces 4, 5 sont représentées en pointillés. Pour la simplicité du dessin, on a représenté seulement aux figures 3, 4 les pinces 4, 5, un seul fil 2, le support 3, et une portion du peigne 10.

Le fonctionnement du dispositif 1 est le suivant :

Phase I :

Le début de cette phase I correspond à l'état initial lors de la mise en route du procédé. Les pinces 4, 5 sont ouvertes et séparées l'une de l'autre par la distance D ; les fils 2 n'ont subi aucun déplacement transversal. La pince arrière 5 se ferme alors (mouvement $M_1$) de façon à appliquer les fils 2 sur le support 3.

Phase II :

Les fils 2 sont déplacés transversalement dans le sens de la flèche $F_3$ (mouvement $M_2$) par les moyens 9, grâce à un déplacement du peigne 10 sous l'action du vérin 11. La portion déplacée des fils s'étend depuis la pince arrière 5 jusqu'en amont de la pince avant 4, entre la pince arrière 5 et le peigne 10. Cette portion passe à travers la pince avant 4 ouverte, sans la toucher, cette portion étant dépourvue de contact avec le support 3.

Phase III :

La pince avant 4 se ferme (mouvement $M_3$). Les fils 2 déplacés dans la phase II sont alors appliqués sur la surface du support 3 entre les pinces 4, 5.

Phase IV :

La pince arrière 5 s'ouvre (mouvement $M_4$), elle vient ensuite s'appliquer contre la pince avant 4, dans le sens de la flèche $F_2$ (mouvement $M_5$), puis elle se ferme en restant appliquée contre la pince 4 (mouvement $M_6$).

Phase V :

La pince avant 4 s'ouvre (mouvement $M_7$) et la pince arrière 5, toujours fermée, se déplace longitudinalement dans la direction de progression $F_1$ -

(mouvement $M_8$) jusqu'à ce que la distance séparant les pinces 4, 5 soit égale à D, ce qui provoque le déplacement de la nappe 17 dans la direction $F_1$. Le moteur 18 est un moteur pneumatique constamment sous pression, et la progression de la nappe 17 dans la direction $F_1$ provoque la rotation de la bobine 16 et donc l'enroulement, sur cette bobine, d'une longueur de nappe 17 équivalente à D. D'autre part la bobine 15 et les appareils 13, 14, actionnés par la traction exercée par la pince arrière 5 sur les fils 2 et le support 3 laissent arriver une longueur équivalente de fils 2 et de support 3.

Phase VI :

On effectue alors un déplacement transversal des fils 2 dans l'autre direction transversale $F_4$, grâce à un déplacement du peigne 10 (mouvement $M_9$), sans qu'il y ait de contact entre la portion déplacée de fils 2 et le support 3 ou la pince avant 4 ouverte. Ce déplacement transversal est donc analogue à celui qui est effectué à la phase II, mais en sens inverse.

Phase VII :

La pince avant 4 se referme (mouvement $M_{10}$). Les fils 2 déplacés dans la phase VI sont alors appliqués sur la surface du support 3 entre les pinces 4, 5, de façon analogue à la phase III.

Phase VIII :

La pince arrière 5 s'ouvre (mouvement $M_{11}$) et vient ensuite s'appliquer contre la pince avant 4, dans le sens de la flèche $F_2$ (mouvement $M_{12}$), puis elle se ferme en restant appliquée contre la pince 4 (mouvement $M_{13}$), de façon analogue à la phase IV.

Phase IX :

La pince avant 4 s'ouvre (mouvement $M_{14}$) et la pince arrière 5, toujours fermée, se déplace longitudinalement dans la direction de progression $F_1$ (mouvement $M_{15}$) jusqu'à ce que la distance séparant les pinces 4, 5 soit égale à D, ce qui provoque le déplacement de la nappe 17 dans la direction $F_1$ ainsi qu'une nouvelle arrivée de fils 2 et de support 3, le moteur 18 permettant alors l'enroulement de la nappe 17 sur la bobine 16. La phase IX est donc analogue à la phase V.

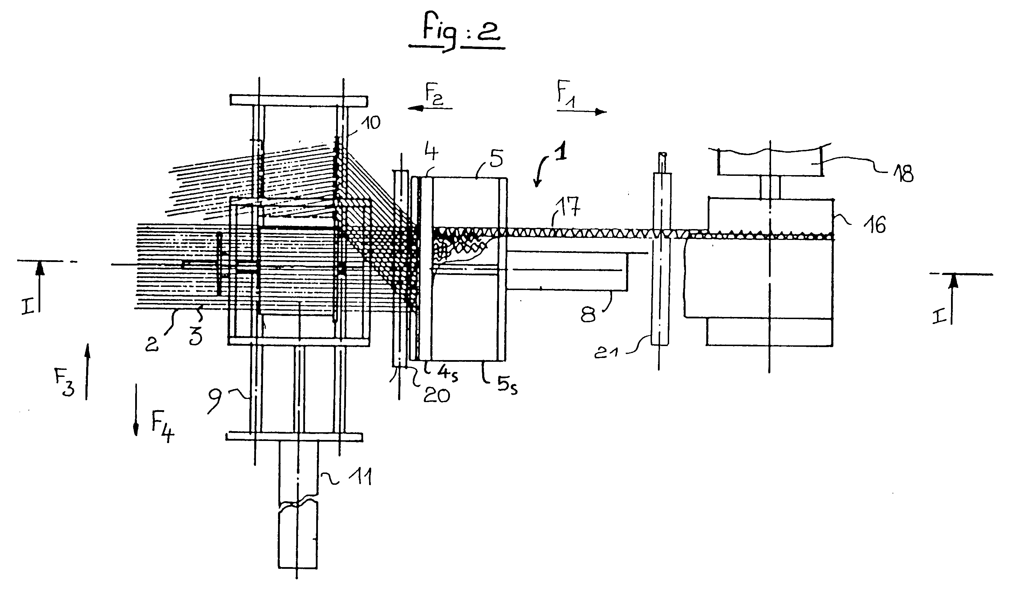

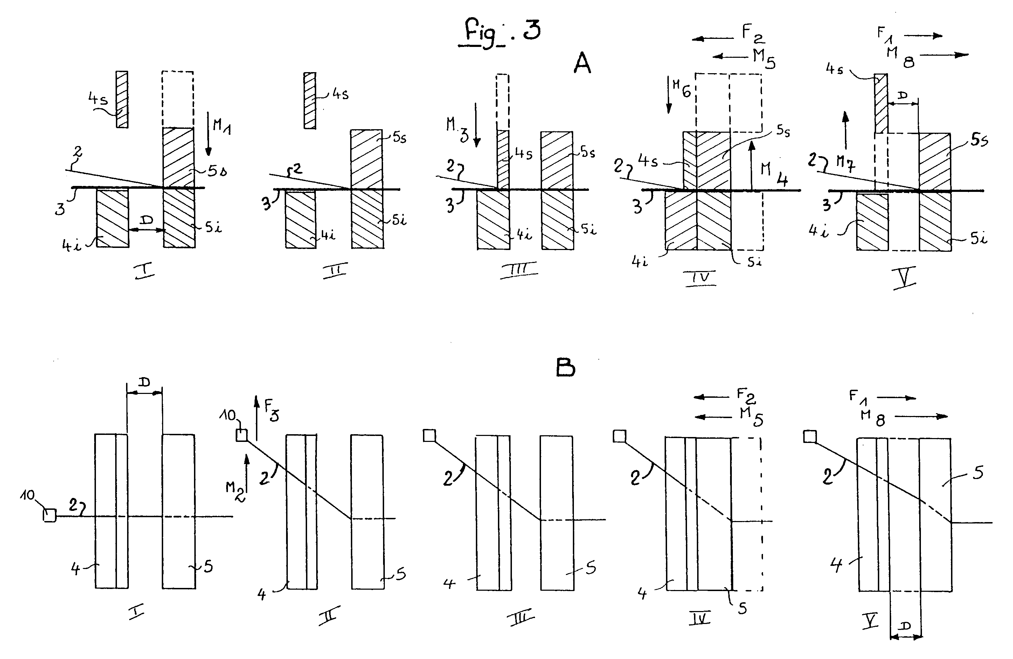

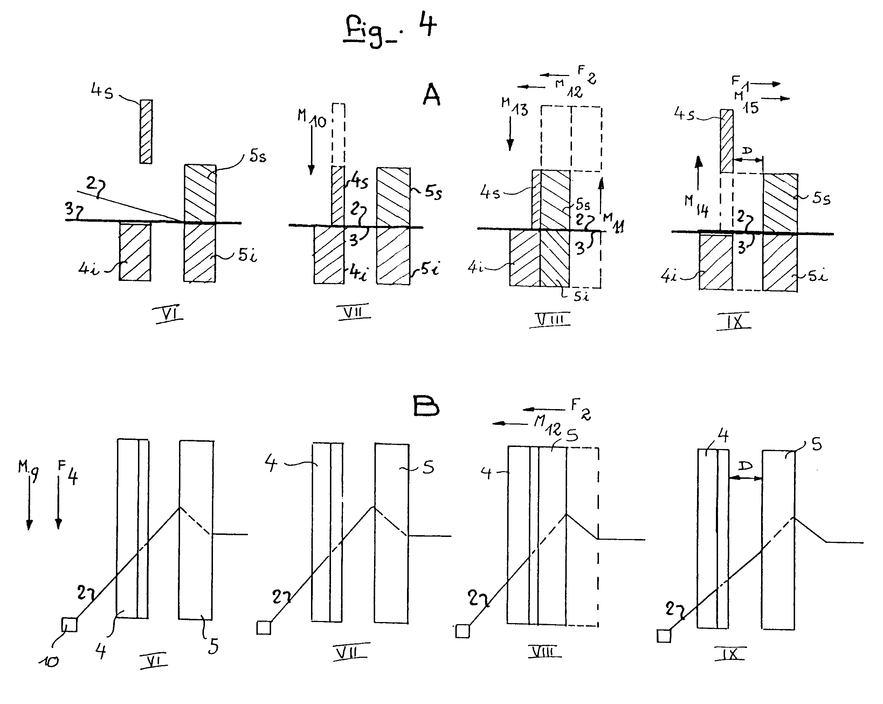

Le cycle recommence alors à la phase II, pour décrire successivement les phases II à IX, ainsi de suite. Chaque fois qu'un vérin 6, 7, 8, 11 a terminé sa course dans le cycle précédemment décrit, il actionne un capteur qui commande le retour de ce vérin ou le mouvement d'un autre vérin selon un automatisme géré par un séquenceur pneumatique du dispositif 1 qui est donc dépourvu de lien mécanique (par exemple des cames) entre ces vérins. Ce séquenceur n'est pas représenté sur le dessin dans un but de simplification. Le dispositif 1 fonctionnant comme précédemment décrit permet d'obtenir la nappe 17 comportant le support 3 à la surface duquel sont appliqués les fils 2 sous forme de lignes sinueuses. Une portion de cette nappe 17 seulement est représentée à la figure 2. La figure 5 représente vue de dessus une portion d'un de ces fils 2 de la nappe 17. Ce fil 2 décrit une ligne brisée de sommets 22. L représente la longueur de fil 2 entre deux sommets 22 successifs, c'est-à-dire la longueur d'un segment rectiligne 23 de la ligne brisée, et 2D représente la distance rectiligne entre deux sommets 22 reliés par deux segments 23, c'est-à-dire la distance rectiligne entre deux sommets 22, reliés par le fil 2 par l'intermédiaire d'un autre sommet 22. D correspond à l'écartement des pinces 4, 5 dans les phases précédemment décrites. Par définition, le taux de déplacement T est donné par la relation :

$$T = L/D$$

L'invention couvre les cas où le fil 2 décrit une forme sinueuse qui ne comporte pas de segment rectiligne, auquel cas la longueur L rectiligne correspondant au segment de droite 23 entre deux sommets 22 successifs ne correspond pas exactement à la forme du fil 2 entre ces deux sommets, mais le taux de déplacement T est toujours donné par la formule :

$$T = L/D$$

A la figure 5, $G_1$ et $G_2$ représentent chacune une droite passant par un sommet 22 sur deux de la ligne décrite par le fil 2, $G_1$ et $G_2$ ayant une direction longitudinale parallèle à la direction de progression $F_1$, lors de la réalisation de la nappe 17. Le fil 2 décrit une forme sinueuse entre ces deux lignes $G_1$, $G_2$, 2D étant la distance rectiligne entre deux sommets successifs 22 sur une même droite $G_1$ ou $G_2$, A représentant la distance entre les deux droites $G_1$, $G_2$, c'est-à-dire l'amplitude des ondulations décrites par le fil 2.

A la figure 5, chaque segment de ligne droite 23 fait l'angle aigu $\alpha$ avec les droites $G_1$, $G_2$. Lorsque le fil 2 a, entre les sommets 22 correspondant à ce segment 23, une forme sinueuse non rectiligne, l'angle $\alpha$ représente la direction moyenne du fil 2 entre ces sommets 22.

L'invention présente les avantages suivants :
- Le dispositif 1 fait appel à des mouvements simples pour les pinces 4, 5 ; il est donc économique pour sa réalisation et sa mise en oeuvre.

- La pose des fils 2 sur le support 3 est effectuée de façon très précise par suite du fonctionnement séquentiel, pas à pas, du dispositif 1, et par suite du fait que le déplacement transversal des fils 2 et leur application sur le support 3 sont effectués lorsque le support 3 est immobile. Ceci permet une grande régularité géométrique pour la disposition des fils 2 sur le support 3 avec un taux de déplacement T défini de façon précise pour tous les fils 2. C'est ainsi que, pour chaque fil 2, la variation du taux de déplacement T, par rapport à une valeur nominale quelconque $T_n$, est au plus égale à 5 % par excès ou par défaut, et de préférence au plus égale à 3 % par excès ou par défaut, c'est-à-dire que la longueur L et la distance 2D sont pratiquement constants pour un fil 2 donné, l'angle aigu $\alpha$ formé par un segment 23 quelconque avec les droites $G_1$, $G_2$, c'est-à-dire avec la direction longitudinale, étant donc pratiquement constant tout le long du fil 2, trois sommets 22 successifs formant un triangle pratiquement isocèle pour chaque fil 2. La nappe 17 ainsi réalisée se caractérise donc par une grande régularité de ses caractéristiques mécaniques sur toute sa longueur. Le taux de déplacement nominal $T_n$ peut varier dans de larges limites d'une nappe à l'autre, ce taux $T_n$ variant de préférence de 1 à 3.

L'invention permet en particulier de garder cette précision lorsque la distance entre des fils 2 voisins est nulle ou faible, par exemple inférieure à 1,5 mm, et lorsque la distance D est faible, par exemple comprise entre 5 et 10 mm pour des fils textiles dont le diamètre varie entre 0,2 et 2 mm, indépendamment du taux nominal $T_n$.

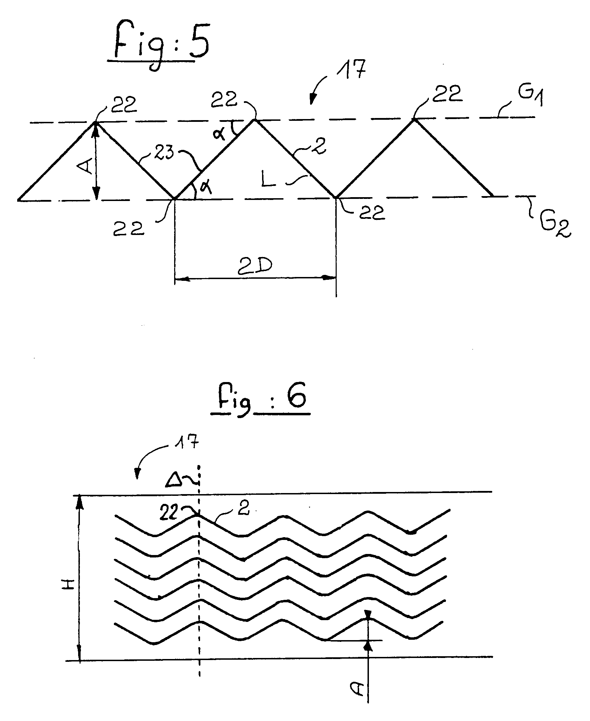

La figure 6 représente vue de dessus une portion de nappe 17 conforme à l'invention, cette nappe 17 comportant par exemple six fils 2 ondulés de la même manière, le taux de déplacement nominal $T_n$ étant le même pour tous les fils 2. L'amplitude A de l'ondulation de chaque fil 2 est inférieure à la largeur H de la nappe 17, et la variation du taux de déplacement T est au plus égale à 3 % par excès ou par défaut, par rapport à la valeur nominale arbitraire $T_n$ pour tous les fils 2. Etant donné que les pinces 4, 5 sont orientées perpendiculairement à la flèche $F_1$, c'est-à-dire perpendiculairement à la direction longitudinale de la nappe 17, qui est la direction moyenne des fils 2, les sommets 22 de tous ces fils 2 sont disposés suivant des droites $\Delta$ perpendiculaires à cette direction longitudinale, une telle droite $\Delta$ étant représentée en pointillés à la figure 6.

Dans un autre exemple de réalisation, la nappe 17 a les caractéristiques suivantes :

. Support 3 : bande de caoutchouc non vulcanisé d'épaisseur 0,5 mm et de largeur 192 mm ;

. Fils 2 : nombre de fils = 96 ; ces fils textiles sont des câblés de polyamide de diamètre 0,8 mm, la distance entre les axes de deux fils 2 voisins étant de 2 mm.

. Taux de déplacement nominal $T_n$ 1,93 ; le taux de déplacement nominal $T_n$ est le même pour tous les fils 2 ; pour chaque fil 2 le taux T ne varie pas de plus de 2 % par excès ou par défaut de cette valeur nominale $T_n$ avec la relation $1,89 \leq T \leq 1,97$ ;

. Distance D : 7,5 mm.

La vitesse de réalisation de la nappe 17 dans le dispositif 1 est de 10 m/heure pour cet exemple.

Le taux de déplacement nominal $T_n$ est constant dans cet exemple, mais l'invention permet de faire varier ce taux $T_n$ suivant les fils, en effectuant un déplacement transversal variable suivant les fils. Ceci est obtenu par exemple en inclinant le peigne 10 par rapport à la direction longitudinale, comme décrit plus loin.

Les nappes conformes à l'invention sont utilisées notamment pour renforcer des enveloppes de pneumatiques, par exemple dans le sommet ou dans les flancs. Il peut être avantageux de diminuer ou de faire disparaître au moins partiellement la forme sinueuse des fils lors de la conformation de ces enveloppes sur un tambour, le taux de déplacement nominal $T_n$ diminuant alors et prenant éventuellement la valeur 1.

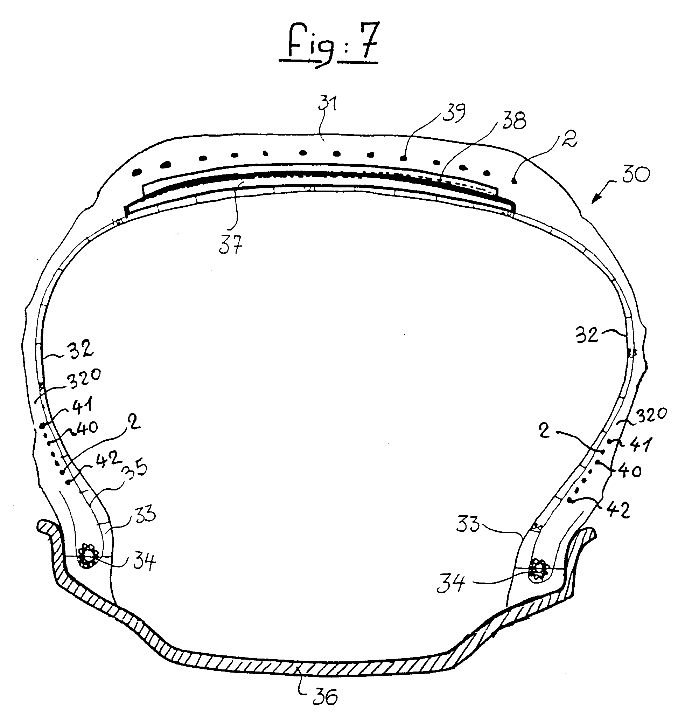

La figure 7 représente par exemple en coupe radiale une enveloppe de pneumatique comportant de telles nappes dans lesquelles la forme sinueuse des fils a disparu après conformation.

Cette enveloppe 30 comporte un sommet 31, deux flancs 32 et deux bourrelets 33 renforcés chacun par une tringle 34, ces tringles 34 étant reliées par une nappe carcasse radiale 35. L'enveloppe 30 est montée sur la jante 36. Le sommet 31 est renforcé par deux nappes 37, 38 de façon connue en soi. Au-dessus de ces nappes de renfort de sommet 37, 38 se trouve disposée une nappe de renfort 39 permettant de fretter les nappes 37, 38. Les fils 2 de cette nappe 39 sont orientés dans la direction longitudinale de l'enveloppe 30, c'est-à-dire qu'ils sont disposés suivant des cercles, chacun de ces cercles étant situé dans un plan perpendiculaire à l'axe de rotation de l'enveloppe 30, cet axe, qui est donc l'axe de ces cercles, n'étant pas représenté sur le dessin dans un but de simplification.

La nappe 39 est obtenue après conformation d'une nappe 17 obtenue conformément à l'invention. Cette conformation est produite lors de la conformation de l'enveloppe 30 crue sur un tambour de type connu et elle fait disparaître la forme sinueuse des fils 2. On vulcanise ensuite l'enveloppe. Lorsque cette nappe 39 est disposée suivant un plan, pour observation, les fils 2 sont pratiquement rectilignes et parallèles entre eux, le taux de déplacement nominal $T_n$ étant alors égal à 1.

Grâce à la grande précision des taux de déplacement T pour la nappe 17, celle-ci après conformation donne une nappe 39 très régulière, qui se caractérise donc par des propriétés mécaniques bien définies, conformes à ce que l'on désire.

L'enveloppe 30 comporte en outre deux nappes identiques de protection 40. Chacune de ces nappes 40 est disposée dans un flanc 32, dans la gomme 320 de ce flanc, cette gomme étant située du côté extérieur de la carcasse 35. Chacune de ces nappes 40 comporte des fils 2, chacun de ces fils 2 étant disposé selon un cercle, dont l'axe est l'axe de rotation de l'enveloppe 30, c'est-à-dire que ces fils sont orientés selon la direction longitudinale de l'enveloppe 30. Pour chaque nappe 40, le fil 2 le plus éloigné de l'axe de rotation de l'enveloppe 30 est référencé 41, et le fil 2 le plus proche de cet axe est référencé 42. Pour chaque nappe 40, le fil 41, le plus éloigné de la jante 36, est donc disposé suivant le cercle de plus grand rayon, et le fil 42, le plus proche de la jante 36, est donc disposé suivant le cercle de plus petit rayon. Chacune de ces nappes 40 est réalisée à partir d'une nappe conforme à l'invention dans laquelle on a fait disparaître la forme des fils 2 lors de la conformation, comme pour la nappe 39.

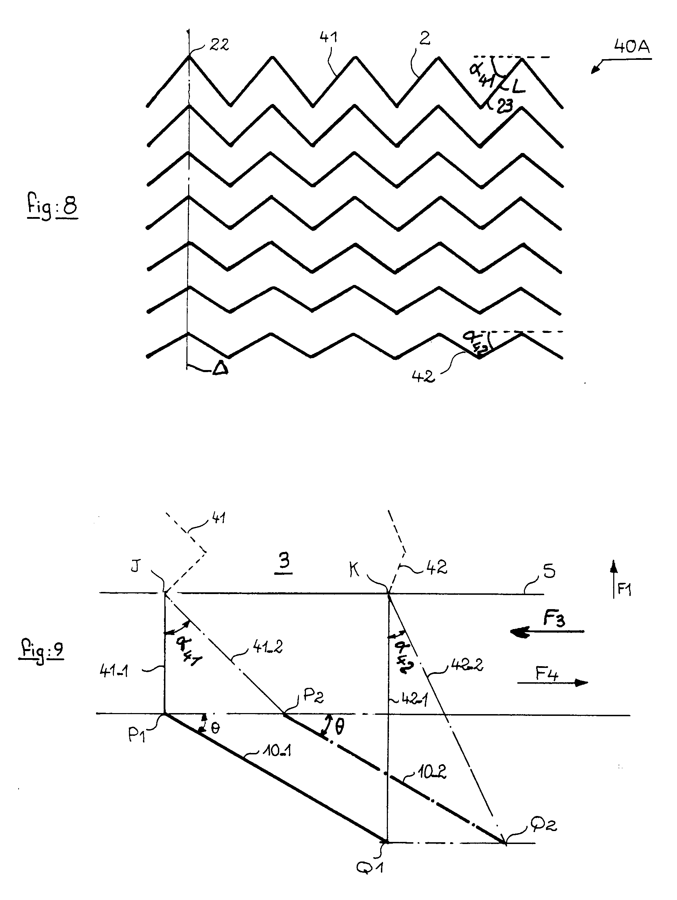

La figure 8 représente, vue de dessus, une portion de la nappe 40A correspondant à une nappe 40, avant conformation. Pour la simplicité du dessin, cette nappe 40A a été limitée à sept fils 2.

Le taux de déplacement nominal $T_n$ varie d'un fil 2 à l'autre, pour cette nappe 40A. Le fil 41 a le taux $T_n$ leplus élevé et le fil 42 a le taux $T_n$ le plus faible, les fils 41, 42 étant les fils extrêmes de cette nappe 40.

Les fils 2 disposés entre ces fils extrêmes 4l, 42 ont un taux $T_n$ qui diminue du fil 41 au fil 42. Tous les fils 2 de la nappe 40A ont ici encore leurs sommets 22 disposés suivant des droites Δ perpendiculaires à la direction longitudinale de la nappe 40A, cette direction longitudinale étant la direction moyenne des fils 2. Une telle droite Δ est représentée à la figure 8.

La réalisation de la nappe 40A est effectuée par exemple avec le dispositif 1 de la façon suivante. La figure 9 représente, vue de dessus, une partie du dispositif 1 lors de cette réalisation. La pince arrière 5 fermée est schématisée par une droite, la pince avant 4 ouverte n'est pas représentée.

Dans la position initiale, le fil 41 est référencé 41-1 et le fil 42 est référencé 42-1. Le guide fils 10, par exemple un peigne, référencé 10-1 lors de cette position initiale, est incliné de l'angle $\theta$ par rapport à la direction transversale qui est parallèle aux flèches $F_3$, $F_4$.

Le peigne 10 comporte deux extrémités P, Q référencées $P_1$, $Q_1$ dans la position initiale. Le fil 41-1 passe par l'extrémité $P_1$ et le fil 42-1 passe par l'extrémité $Q_1$. D'autre part, la pince arrière 5 applique sur le support 3 le fil 41-1 au point J et le fil 42-1 au point K.

On déplace ensuite le peigne 10 transversalement dans le sens de la flèche $F_4$, ce peigne étant toujours incliné de l'angle $\theta$ par rapport à la direction transversale. Le peigne 10 prend alors la position 10-2, les extrémités P, Q prennent les position $P_2$, $Q_2$, et les fils 41, 42 prennent les positions respectives 41-2, 42-2, le système d'alimentation 12 permettant l'arrivée de longueur supplémentaire de ces fils 41, 42. Le fil 41-2 passe par l'extrémité $P_2$ et par le point J et le fil 42-2 passe par l'extrémité $Q_2$ et par le point K, les points J, K n'ayant pas varié d'une de ces positions à l'autre puisque la pince arrière 5 reste fermée et immobile. La droite joignant les points $P_1$, $P_2$ est parallèle à la direction transversale et donc elle est parallèle à la droite joignant les points J, K. Dans la position initiale la droite joignant les points J, $P_1$ (position du fil 41-1) et la droite joignant les points K, $Q_1$ (position du fil 42-1) sont orientées longitudinalement selon la flèche $F_1$, et elles sont donc perpendiculaires aux droites JK, $P_1 P_2$.

On voit sur la figure 9 que le segment de droite $JP_2$ (position du fil 41-2 au voisinage de la pince 5) fait avec la direction longitudinale un angle aigu $\alpha_{41}$ qui est supérieur à l'angle aigu $\alpha_{42}$ que fait le segment de droite $KQ_2$ (position du fil 42-2 au voisinage de la pince 5) avec cette direction longitudinale. Il s'en suit que le taux de déplacement nominal $T_n$ du fil 41 est supérieur au taux de déplacement nominal $T_n$ du fil 42 car $\alpha_{41}$ et $\alpha_{42}$ représentent les angles formés respectivement par les fils 41 et 42 avec la direction longitudinale de la nappe 40A, comme représenté à la figure 8 en supposant que les fils 2 de la nappe 40A ont chacun la forme d'une ligne brisée constituée par des segments de droite 23, la direction longitudinale étant indiquée en pointillés sur cette figure 8. Une portion des fils 41, 42 tels que déposés sur le support 3 est représentée en pointillés à la figure 9.

Ici encore, grâce à la grande précision des taux de déplacement nominaux $T_n$ pour la nappe 40A, celle-ci, après conformation, donne une nappe 40 très régulière qui se caractérise donc par des propriétés mécaniques bien définies, conformes à ce que l'on désire.

De préférence, dans une nappe où les fils 2 ont un taux de déplacement nominal $T_n$ variable suivant la largeur, comme par exemple dans les nappes 40A précédemment décrites, ce taux $T_n$ est de préférence supérieur à 1 et inférieur à 3, l'angle $\theta$ d'inclinaison du guide fil variant de préférence de 0 à 60°.

Bien entendu, l'invention n'est pas limitée aux exemples de réalisation précédemment décrits. C'est ainsi par exemple que la diminution du taux de déplacement nominal $T_n$ des fils de renfort peut être obtenue par conformation d'articles autres que des enveloppes de penumatiques, par exemple de tuyaux, des membranes, après avoir incorporé dans ces articles des nappes conformes à l'invention, une vulcanisation étant notamment effectuée sur ces articles après conformation.

L'invention couvre aussi les cas où la diminution du taux de déplacement nominal $T_n$ est réversible, par exemple dans le cas d'une membrane constituée par une nappe conforme à l'invention dont le support est élastique, la déformation de cette membrane, par exemple sous l'effet de la pression d'un fluide, provoquant une diminution de ce taux, mais les fils reprenant leur taux $T_n$ initial lorsque la membrane reprend sa forme initiale. Cette membrane, réalisée par exemple en caoutchouc vulcanisé, peut servir notamment pour la confection, la conformation ou la vulcanisation d'enveloppes de pneumatiques.

## Revendications

1. Dispositif (1) permettant d'appliquer au moins un fil (2) sur la surface d'un support (3) caractérisé par les points suivants :

    a) il comporte deux pinces (4,5) disposées dans un ordre invariable suivant une direction ($F_1$) dite "direction de progression", la première pince (4) étant dite "pince avant" et la deuxième pince (5) étant dite "pince arrière" ;

    b) le dispositif (1) comporte des moyens (6,7) permettant d'ouvrir et de fermer ces pinces (4,5), de telle sorte qu'elles soient dépourvues de contact avec le support (3) et le fil (2) lorsqu'elles sont ouvertes et qu'elles soient au contact du support et du fil lorsqu'elles sont fermées ;

    c) l'agencement de la pince avant (4) est tel que cette pince ne subisse pratiquement que des mouvements susceptibles de l'ouvrir ou de la fermer ;

    d) le dispositif (1) comporte des moyens (8) permettant de déplacer la pince arrière (5) dans la direction de progression ($F_1$), lorsqu'elle est fermée, de façon à faire progresser le support (3) et le fil (2) dans cette direction, la pince arrière (5) s'éloignant alors de la pince avant (4) qui est ouverte ;

    e) le dispositif (1) comporte des moyens (8) permettant de déplacer la pince arrière (5) dans la direction ($F_2$) inverse a la direction de progression ($F_1$), lorsque cette pince ouverte, la pince arrière (5) se rapprochant alors de la pince avant (4) qui est fermée ;

    f) le dispositif (1) comporte des moyens (9) permettant de déplacer le fil (2) dans les directions transversales par rapport à la direction de progression ($F_1$), la pince avant (4) étant disposée entre ces moyens et la pince arrière (5), ces moyens étant agencés de telle sorte que, lors de ce déplacement transversal :

      - la portion de fil (2) déplacée s'étende depuis la pince arrière (5) jusqu'en amont de la pince avant (4) ;

      - la portion de fil (2) déplacée ne soit pas au contact du support (3) ;

      - la pince avant (4) soit ouverte et la pince arrière (5) fermée.

2. Dispositif (1) selon la revendication 1, caractérisé en ce qu'il permet d'appliquer plusieurs fils (2) sur la surface du support (3), et en ce que les moyens (9) permettant de déplacer transversalement ces fils comportent un guide (10) au contact de ces fils (2).

3. Dispositif (1) selon la revendication 2, caractérisé en ce que le guide (10) est incliné par rapport à la direction de progression ($F_1$).

4. Dispositif (1) selon l'une quelconque des revendications 2 ou 3, caractérisé en ce que le guide (10) est un peigne.

5. Dispositif (1) selon l'une quelconque des revendications 1 à 4, caractérisé en ce qu' il comporte un séquenceur pneumatique permettant de gérer automatiquement les mouvements des pinces (4,5) et des moyens permettant de déplacer transversalement le ou les fils (2).

6. Procédé permettant d'appliquer au moins un fil (2) sur la surface d'un support (3), caractérisé par les points suivants :

    a) on utilise deux pinces (4,5) disposées dans un ordre invariable suivant une direction ($F_1$), dite "direction de progression", la première pince (4) étant dite "pince avant" et la deuxième pince (5) étant dite "pince arrière" ;

    b) lorsqu'on ouvre les pinces (4,5), elles ne sont au contact ni avec le support (3), ni avec le fil (2), et lorsqu'on ferme ces pinces elles sont au contact à la fois du support et du fil ;

c) on ne fait pratiquement subir à la pince avant (4) que des mouvements susceptibles de l'ouvrir ou de la fermer ;

d) après avoir fermé la pince arrière (5), on la déplace dans la direction de progression ($F_1$) de façon à faire progresser le support (3) et le fil (2) dans cette direction, en éloignant la pince arrière (5) de la pince avant (4) que l'on a préalablement ouverte ;

e) après avoir ouvert la pince arrière (5), on la déplace dans la direction ($F_2$) inverse à la direction de progression ($F_1$), de façon à rapprocher la pince arrière (5) de la pince avant (4) que l'on a préalablement fermée ;

f) après avoir ouvert la pince avant (4) et fermé la pince arrière (5), on déplace le fil (2), dans des directions transversales ($F_3$,$F_4$) par rapport à la direction de progression ($F_1$), de telle sorte que la portion de fil déplacée s'étende depuis la pince arrière (5) jusqu'en amont de la pince avant (4), sans que la portion de fil déplacée soit au contact du support.

7. Procédé selon la revendication 6, caractérisé en ce qu'il permet d'appliquer plusieurs fils (2) sur la surface du support (3) et en ce qu'on déplace transversalement les fils (2) de façon à ce qu' ils fassent, avec la direction de progression, des angles aigus $\alpha$ différents d'un fil à l'autre.

8. Procédé selon l'une quelconque des revendications 6 ou 7, caractérisé en ce qu'on utilise un séquenceur pneumatique permettant de gérer automatiquement les mouvements des pinces et les déplacements transversaux des fils.

9. Nappe renforçante (17,40A) comportant des fils (2) de renfort, appliqués sur un support (3), qui ont une forme sinueuse avec des sommets (22), cette nappe étant caractérisée par les points suivants :

a) elle comporte plusieurs fils (2) sur sa largeur (H) ;

b) les fils (2) ne sont pas entrecroisés ;

c) l'amplitude (A) de l'ondulation de chaque fil (2) est inférieure à la largeur (H) la nappe ;

d) pour chaque fil (2), la variation du taux de déplacement T est au plus égale à 5 % par excès ou par défaut par rapport à une valeur nominale quelconque Tn, le taux de déplacement T étant défini par la relation :

$$T = L/D$$

L étant la distance rectiligne entre deux sommets (22) successifs et 2D étant la distance rectiligne entre deux sommets (22) reliés par le fil (2) par l'intermédiare d'un autre sommet (22).

10. Nappe renforçante (17,40A) selon la revendication 9, caractérisée en ce que la variation du taux de déplacement T est au plus égale à 3 % par excès ou par défaut par rapport à une valeur nominale quelconque Tn pour chaque fil (2).

11. Nappe renforçante (17) selon l'une quelconque des revendications 9 ou 10, caractérisée en ce que le taux de déplacement nominal Tn est le même pour tous les fils (2).

12. Nappe renforçante (40A) selon l'une quelconque des revendications 9 ou 10, caractérisée en ce que le taux de déplacement nominal Tn varie d'un fil (2) à l'autre.

13. Nappe renforçante (17,40A) selon l'une quelconque des revendications 9 à 12, caractérisée en ce que chaque fil (2) forme des sommets (22) tels que le segment de droite (23) joignant deux sommets (22) successifs quelconques forme un angle aigu $\alpha$ pratiquement constant avec la direction longitudinale de la nappe.

14. Article (30) comportant au moins une nappe renforçante (17,40A) conforme à l'une quelconque des revendications 9 à 13.

15. Article (30) selon la revendication 14, caractérisé en ce qu'il est une enveloppe de pneumatique.

16. Procédé consistant à incorporer dans un article (30) au moins une nappe renforçante (17,40A) conforme à l'une quelconque des revendications 9 à 13, et à conformer ensuite cet article de façon à ce que le taux de déplacement nominal Tn des fils (2) diminue.

17. Procédé selon la revendication 16, caractérisé en ce que le taux Tn des fils (2) devient égal à 1 après conformation.

18. Procédé selon l'une quelconque des revendications 16 ou 17, caractérisé en ce que l'on vulcanise l'article (30) après conformation.

**Claims**

1. A device (1) for applying at least one thread (2) to the surface of a support (3), characterised by the following features:

(a) it comprises two clamps (4, 5) arranged in an invariable order along one direction ($F_1$), called "direction of advance", the first clamp (4) being called the "front clamp" and the second clamp (5) being called the "rear clamp";

(b) the device (1) comprises means (6, 7) which make it possible to open and close said clamps (4, 5) in such a manner that they are without contact with the support (3) and the thread (2) when they are open and that they are in contact with the support and the thread when they are closed;

(c) the arrangement of the front clamp (4) is such that said clamp experiences practically only movements capable of opening or closing it;

(d) the device (1) comprises means (8) which make it possible to displace the rear clamp (5) in the direction of advance ($F_1$) when it is closed, so as to cause the support (3) and the thread (2) to advance in said direction, the rear clamp (5) then moving away from the front clamp (4), which is open;

(e) the device (1) comprises means (8) which make it possible to displace the rear clamp (5) in the opposite direction ($F_2$) to the direction of advance ($F_1$) when said clamp is open, the rear clamp (5) then approaching the front clamp (4) which is closed;

(f) the device (1) comprises means (9) which make it possible to displace the thread (2) in directions transverse to the direction of advance ($F_1$), the front clamp (4) being arranged between said means and the rear clamp (5), said means being so arranged that upon this transverse displacement:

- the portion of thread (2) displaced extends from the rear clamp (5) to upstream of the front clamp (4);
- the portion of thread (2) displaced is not in contact with the support (3);
- the front clamp (4) is open and the rear clamp (5) closed.

2. A device (1) according to Claim 1, characterised in that it makes it possible to apply several threads (2) to the surface of the support (3), and in that the means (9) making it possible to displace these threads transversely comprises a guide (10) in contact with said threads (2).

3. A device (1) according to Claim 2, characterised in that the guide (10) is inclined with respect to the direction of advance ($F_1$).

4. A device (1) according to any one of Claims 2 or 3, characterised in that the guide (10) is a comb.

5. A device (1) according to any one of Claims 1 to 4, characterised in that it comprises a pneumatic sequencer which makes it possible automatically to run the movements of the clamps (4, 5) and of the means permitting the transverse displacement of the thread or threads (2).

6. A process which makes it possible to apply at least one thread (2) to the surface of a support (3), characterised by the following features:

(a) two clamps (4, 5) are used which are arranged in an invariable order in one direction ($F_1$), called the "direction of advance", the first clamp (4) being called the "front clamp" and the second clamp (5) being called the "rear clamp";

(b) when the clamps (4, 5) are opened, they are not in contact either with the support (3) or with the thread (2), and when said clamps are closed they are in contact both with the support and with the thread;

(c) the front clamp (4) is caused to experience practically only movements which are capable of opening or closing it;

(d) after having closed the rear clamp (5), it is displaced in the direction of advance ($F_1$) in such a manner as to cause the support (3) and the thread (2) to advance in said direction, moving the rear clamp (5) away from the front clamp (4) which has been previously opened;

(e) after having opened the rear clamp (5), it is displaced in the opposite direction ($F_2$) to the direction of advance ($F_1$), so as to bring the rear clamp (5) towards the front clamp (4), which has been previously closed;

(f) after having opened the front clamp (4) and closed the rear clamp (5), the thread (2) is displaced in directions ($F_3$, $F_4$) transverse to the direction of advance ($F_1$) in such a manner that the portion of thread displaced extends from the rear clamp (5) to upstream of the front clamp (4) without the portion of thread displaced being in contact with the support.

7. A process according to Claim 6, characterised in that it makes it possible to apply several threads (2) to the surface of the support (3) and in that the threads (2) are displaced transversely so that they form acute angles $\alpha$ with

the direction of advance which differ from one thread to the next.

8. A process according to any one of Claims 6 or 7, characterised in that a pneumatic sequencer is used which makes it possible automatically to run the movements of the clamps and the transverse displacements of the threads.

9. A reinforcing ply (17, 40A) comprising reinforcement threads (2), applied to a support (3), which have a sinuous shape with vertices (22), said ply being characterised by the following features:

    (a) it comprises a plurality of threads (2) over its width (H);
    (b) the threads (2) are not interwoven;
    (c) the amplitude (A) of the undulation of each thread (2) is less than the width (H) of the ply;
    (d) for each thread (2), the variation in the displacement ratio T is at most equal to 5% plus or minus with respect to any nominal value $T_n$, the displacement ratio T being defined by the relationship:

$$T = L/D$$

L being the rectilinear distance between two successive vertices (22) and 2D being the rectilinear distance between two vertices (22) connected by the thread (2) via another vertex (22).

10. A reinforcing ply (17, 40A) according to Claim 9, characterised in that the variation in the displacement ratio T is at most equal to 3% plus or minus with respect to any nominal value $T_n$ for each thread (2).

11. A reinforcing ply (17) according to any one of Claims 9 or 10, characterised in that the nominal displacement ratio $T_n$ is the same for all the threads (2).

12. A reinforcing ply (40A) according to any one of Claims 9 or 10, characterised in that the nominal displacement ratio $T_n$ varies from one thread (2) to the next.

13. A reinforcing ply (17, 40A) according to any one of Claims 9 to 12, characterised in that each thread (2) forms vertices (22) such that the straight-line segment (23) joining any two successive vertices (22) forms a practically constant acute angle $\alpha$ with the longitudinal direction of the ply.

14. An article (30) comprising at least one reinforcing ply (17, 40A) in accordance with any one of Claims 9 to 13.

15. An article (30) according to Claim 14, characterised in that it is a pneumatic tyre.

16. A process which consists in incorporating within an article (30) at least one reinforcing ply (17, 40A) according to any one of Claims 9 to 13, and then shaping said article in such a manner that the nominal displacement ratio $T_n$ of the threads (2) decreases.

17. A process according to Claim 16, characterised in that the ratio $T_n$ of the threads (2) becomes equal to 1 after shaping.

18. A process according to any one of Claims 16 or 17, characterised in that the article (30) is vulcanised after shaping.

**Patentansprüche**

1. Vorrichtung (1), die das Aufbringen zumindest eines Fadens (2) auf der Oberfläche einer Unterlage (3) erlaubt, gekennzeichnet durch die folgenden Punkte:

    a) Sie weist zwei Zangen (4,5) auf, die in unveränderlicher Reihenfolge entlang einer Richtung ($F_1$) angeordnet sind, die "Fortschrittrichtung" heißt, wobei die erste Zange (4) "vordere Zange" und die zweite Zange (5) "hintere Zange" genannt wird;
    b) die Vorrichtung (1) weist Mittel (6,7) auf, die es erlauben, diese Zangen (4,5) so zu öffnen und zu schließen, daß sie keinerlei Kontakt mit der Unterlage (3) und dem Faden (2) haben, wenn sie offen sind und daß sie im Kontakt mit der Unterlage und dem Faden sind, wenn sie geschlossen sind;
    c) die Betätigung der vorderen Zange (4) erfolgt so, daß diese Zange praktisch nur in der Lage ist, die Öffnungs- und Schließbewegungen auszuführen;
    d) die Vorrichtung (1) weist Mittel (8) auf, die es erlauben, die hintere Zange (5) in der Fortschrittrichtung ($F_1$) zu verschieben, wenn sie geschlossen ist, indem man die Unterlage (3) und der Faden (2) in diese Richtung fortschreiten läßt, die hintere Zange (5) entfernt sich so von der vorderen Zange (4), die offen ist;
    e) die Vorrichtung (1) weist Mittel (8) auf, die es erlauben, die hintere Zange (5) in der Richtung ($F_2$) entgegengesetzt zur Fortschrittrichtung ($F_1$) zu bewegen, wenn diese Zange offen ist, die hintere Zange (5) nähert sich so der vorderen Zange (4), die geschlossen ist;

f) die Vorrichtung (1) weist Mittel (9) auf, die es erlauben, den Faden (2) in Richtungen quer zur Fortschrittrichtung ($F_1$) zu verschieben, die vordere Zange (4) liegt zwischen diesen Mitteln und der hinteren Zange (5), diese Mittel werden so betätigt, daß während dieser Querverschiebung:

- der verschobene Teil des Fadens (2) sich von der hinteren Zange (5) bis gerade stromaufwärts der vorderen Zange (4) erstreckt;

- der verschobene Teil des Fadens (2) nicht in Kontakt mit der Unterlage (3) ist;

- die vordere Zange (4) geöffnet und die hintere Zange (5) geschlossen ist.

2. Vorrichtung (1) nach Anspruch 1, dadurch gekennzeichnet, daß sie es erlaubt, mehrere Fäden (2) auf die Oberfläche der Unterlage (3) aufzubringen und dadurch, daß die Mittel (9), die die Querverschiebung dieser Fäden erlauben, eine Führung (10) im Kontakt mit diesen Fäden (2) umfassen.

3. Vorrichtung (1) nach Anspruch 2, dadurch gekennzeichnet, daß die Führung (10) bezüglich der Fortschrittrichtung ($F_1$) geneigt ist.

4. Vorrichtung (1) nach einem der Ansprüche 2 oder 3, dadurch gekennzeichnet, daß die Führung (10) ein Kamm ist.

5. Vorrichtung (1) nach einem der Ansprüche 1 bis 4, dadurch gekennzeichnet, daß sie eine pneumatische Folgevorrichtung aufweist, die es erlaubt, automatisch die Bewegungen der Zangen (4,5) und der Mittel, die die Querverschiebung des oder der Fadens (Fäden) (2) erlauben, zu bewirken.

6. Verfahren, das die Aufbringung zumindest eines Fadens (2) auf der Oberfläche einer Unterlage (3) erlaubt, gekennzeichnet durch die folgenden Punkte:

a) Man verwendet zwei Zangen (4,5), die in einer Richtung ($F_1$), die Fortschrittrichtung genannt wird, in fester Reihenfolge angeordnet sind, wobei die erste Zange (4) "vordere Zange" und die zweite Zange (5) "hintere Zange" genannt wird;

b) wenn man die Zangen (4,5) öffnet, haben sie weder mit der Unterlage (3) noch mit dem Faden (2) Kontakt und wenn man diese Zangen schließt, haben sie gleichzeitig Kontakt mit der Unterlage und dem Faden;

c) man unterzieht die vordere Zange (4) praktisch nur Bewegungen, die sie zum Öffnen oder zum Schließen bringen;

d) nachdem die hintere Zange (5) geschlossen ist, verschiebt man sie dadurch in Fortschrittsrichtung ($F_1$), daß man die Unterlage (3) und den Faden (2) in diese Richtung fortschreiten läßt, wodurch man die hintere Zange (5) von der zuvor geöffneten vorderen Zange (4) entfernt;

e) nachdem man die hintere Zange (5) geöffnet hat, verschiebt man sie in der Richtung ($F_2$) entgegengesetzt zur Fortschrittrichtung ($F_1$) auf die Weise, daß sich die hintere Zange (5) der vorderen Zange (4), die zuvor geschlossen wurde, nähert;

f) nachdem man die vordere Zange (4) geöffnet und die hintere Zange (5) geschlossen hat, verschiebt man den Faden (2) in Richtungen ($F_3$, $F_4$), die quer zur Fortschrittrichtung ($F_1$) verlaufen, auf solche Weise, daß der verschobene Teil des Fadens sich von der hinteren Zange (5) bis stromaufwärts der vorderen Zange (4) erstreckt, ohne daß der verschobene Teil des Fadens Kontakt mit der Unterlage hat.

7. Verfahren nach Anspruch 6, dadurch gekennzeichnet, daß es das Aufbringen mehrerer Fäden (2) auf der Oberfläche der Unterlage (3) erlaubt und daß man die Fäden (2) so querverschiebt, daß sie mit der Fortschrittrichtung spitze Winkel $\alpha$ aufweisen, die von einem Faden zum anderen unterschiedlich sind.

8. Verfahren nach einem der Ansprüche 6 oder 7, dadurch gekennzeichnet, daß man eine pneumatische Folgevorrichtung verwendet, die es erlaubt, die Bewegungen der Zangen und die Querverschiebung der Fäden automatisch zu bewirken.

9. Verstärkungslage (17,40A), umfassend Verstärkungsfäden (2), die auf einer Unterlage (3) aufgebracht sind und die eine Wellenform mit Scheltein (22) haben, wobei die Lage durch die folgenden Punkte gekennzeichnet ist:

a) Sie umfaßt mehrere Fäden (2) über ihre Breite (H);

b) die Fäden (2) kreuzen einander nicht;,

c) die Amplitude (A) der Wellung jedes Fadens (2) ist kleiner als die Breite (H) der Lage;

d) für jeden Faden (2) ist die Veränderung der Verschiebungsrate T höchstens gleich 5 % nach oben oder nach unten bezüglich einem irgendeinem Nominalwert $T_n$; die Verschiebungsrate T ist durch die Bezie-

hung:

$$T = L/D$$

definiert, wobei L der geradlinige Abstand zwischen zwei aufeinanderfogenden Scheiteln (22) ist und 2D der geradlinige Abstand zwischen zwei Scheiteln (22), die durch den Faden (2) über einen anderen Scheitel (22) verbunden sind.

10. Verstärkungslage (17,40A) nach Anspruch 9, dadurch gekennzeichnet, daß die Veränderung der Verschiebungsrate T höchstens gleich ist 3 % nach oben oder unten bezüglich einem irgendeinem Nominalwert $T_n$ eines jeden Fadens (2).

11. Verstärkungslage (17) nach einem der Ansprüche 9 oder 10, dadurch gekennzeichnet, daß die Nominalverschiebungsrate $T_n$ für alle Fäden (2) gleich ist.

12. Verstärkungslage (40A) nach einem der Ansprüche 9 oder 10, dadurch gekennzeichnet, daß die Nominalverschiebungsrate $T_n$ von einem Faden (2) zum anderen unterschiedlich ist.

13. Verstärkungslage (17,40A) nach einem der Ansprüche 9 bis 12, dadurch gekennzeichnet, daß jeder Faden (2) Scheitel (22) so bildet, daß die geraden Segmente (23), die zwei irgendeine aufeinanderfolgende Scheitel (22) verbinden, einen mit der Längsrichtung der Lage praktisch konstanten spitzen Winkel $\alpha$ bilden.

14. Artikel (30), der zumindest eine Verstärkungslage (17,40A) entsprechend einem der Ansprüche 9 bis 13 aufweist.

15. Artikel (30) nach Anspruch 14, dadurch gekennzeichnet, daß er eine Luftreifenhülle ist.

16. Verfahren, bestehend aus dem Einbringen mindestens einer verstärkungslage (17,40A) entsprechend einem der Ansprüche 9 bis 13 in einen Artikel (30) und im anschließenden Umformen dieses Artikels auf eine solche Weise, daß die Nominalverschiebungsrate $T_n$ der Fäden (2) sich verringert.

17. Verfahren nach Anspruch 16, dadurch gekennzeichnet, daß die Rate $T_n$ der Fäden (2) nach der Umformung gleich 1 ist.

18. Verfahren nach einem der Ansprüche 16 oder 17, dadurch gekennzeichnet, daß der Artikel (30) nach der Umbildung vulkanisiert wird.

13

Fig:1

EP 0 318 791 B1

Fig:2

Fig. 3

Fig. 4

A

VI   VII   VIII   IX

B

VI   VII   VIII   IX

EP 0 318 791 B1

Fig : 5

Fig : 6

Fig:7

Fig:8

Fig:9